(19) **Europäisches Patentamt / European Patent Office / Office européen des brevets**

(11) **EP 3 432 039 B1**

(12) **FASCICULE DE BREVET EUROPEEN**

(45) Date de publication et mention de la délivrance du brevet:
**14.12.2022 Bulletin 2022/50**

(51) Classification Internationale des Brevets (IPC):
**G02B 1/10** *(2015.01)*    **G02B 1/11** *(2015.01)*
**G02C 7/10** *(2006.01)*    **G02C 7/00** *(2006.01)*

(21) Numéro de dépôt: **18193883.8**

(52) Classification Coopérative des Brevets (CPC):
**G02B 1/10; G02B 1/11; G02B 1/116; G02B 1/16**

(22) Date de dépôt: **26.03.2010**

(54) **ARTICLE D'OPTIQUE REVÊTU D'UN REVÊTEMENT ANTIREFLET OU RÉFLÉCHISSANT COMPRENANT UNE COUCHE ÉLECTRIQUEMENT CONDUCTRICE À BASE D'OXYDE D'ÉTAIN ET PROCÉDÉ DE FABRICATION**

OPTISCHER ARTIKEL, DER MIT EINER ANTIREFLEX- ODER REFLEKTIERBESCHICHTUNG BESCHICHTET IST, DIE EINE ELEKTRISCH LEITENDE SCHICHT AUF ZINNOXIDBASIS UMFASST, SOWIE ENTSPRECHENDES HERSTELLUNGSVERFAHREN

OPTICAL ITEM COATED WITH AN ANTI-REFLECTIVE OR REFLECTIVE COATING COMPRISING AN ELECTRICALLY CONDUCTIVE FILM MADE OF TIN OXIDE, AND MANUFACTURING METHOD

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **27.03.2009 FR 0901475**

(43) Date de publication de la demande:
**23.01.2019 Bulletin 2019/04**

(62) Numéro(s) de document de la (des) demande(s) initiale(s) en application de l'article 76 CBE:
**17150894.8 / 3 190 436**
**10716588.8 / 2 411 850**

(73) Titulaire: **Essilor International**
**94220 Charenton-Le-Pont (FR)**

(72) Inventeurs:
- **CONTE, Dominique**
  **94220 Charenton-Le-Pont (FR)**
- **PASSARD, Delphine**
  **94220 Charenton-Le-Pont (FR)**
- **SCHERER, Karin**
  **94220 Charenton-Le-Pont (FR)**
- **SIRJEAN, Jean-Louis**
  **94220 Charenton-Le-Pont (FR)**

(74) Mandataire: **Jacobacci Coralis Harle**
**32, rue de l'Arcade**
**75008 Paris (FR)**

(56) Documents cités:
FR-A- 2 913 116    FR-A- 2 917 510
US-A1- 2004 156 110    US-A1- 2005 064 152
US-A1- 2007 166 522    US-A1- 2008 213 473

**Description**

La présente invention concerne d'une manière générale un article d'optique, notamment une lentille ophtalmique, possédant à la fois des propriétés antistatiques, et antireflet ou réfléchissantes, qui présente l'avantage de ne pas développer dans le temps de défauts cosmétiques dus au traitement antistatique qu'il a subi, ainsi qu'un procédé de préparation d'un tel article d'optique.

Il est connu de protéger en surface les verres ophtalmiques, qu'ils soient minéraux ou organiques, au moyen de revêtements durs (anti-abrasion et/ou anti-rayures) généralement à base de polysiloxane. Il est également connu de traiter les lentilles ophtalmiques de façon à empêcher la formation de reflets parasites gênants pour le porteur de la lentille et ses interlocuteurs. La lentille est alors pourvue d'un revêtement antireflet mono- ou multicouches, généralement en matière minérale.

Lorsque la lentille comporte dans sa structure un revêtement dur anti-abrasion, le revêtement antireflet est généralement déposé sur la surface de la couche anti-abrasion. Un tel empilement diminue la résistance aux chocs, en rigidifiant le système qui devient alors cassant. Ce problème est bien connu dans l'industrie des lentilles ophtalmiques en verre organique.

Pour remédier à cet inconvénient on a proposé de disposer une couche de primaire antichoc entre la lentille en verre organique et le revêtement dur anti-abrasion.

Il est bien connu également que les articles d'optique, qui sont composés de matériaux essentiellement isolants, ont tendance à voir leur surface se charger facilement en électricité statique, particulièrement lorsqu'ils sont nettoyés en conditions sèches par frottement de leur surface au moyen d'un chiffon, d'un morceau de mousse synthétique ou de polyester (triboélectricité). Les charges présentes à leur surface créent un champ électrostatique capable d'attirer et de fixer les objets de très faible masse se trouvant à proximité (quelques centimètres), généralement des particules de faibles dimensions telles que des poussières, et ce durant tout le temps où la charge reste sur l'article.

Afin de diminuer ou annuler l'attraction des particules, il est nécessaire de diminuer l'intensité du champ électrostatique, c'est-à-dire de diminuer le nombre de charges statiques présentes à la surface de l'article. Ceci peut être réalisé en rendant les charges mobiles, par exemple en introduisant une couche d'un matériau induisant une forte mobilité des "porteurs de charge". Les matériaux induisant la plus forte mobilité sont les matériaux conducteurs. Ainsi, un matériau de conductivité élevée permet de dissiper plus rapidement les charges.

L'état de la technique révèle qu'un article d'optique peut acquérir des propriétés antistatiques grâce à l'incorporation à sa surface, dans l'empilement de revêtements fonctionnels, d'au moins une couche électriquement conductrice, ou "couche antistatique," ces deux expressions étant utilisées indifféremment.

Cette couche antistatique peut constituer la couche externe de l'empilement de revêtements fonctionnels, une couche intermédiaire (interne) ou être déposée directement sur le substrat de l'article d'optique. La présence d'une telle couche dans un empilement confère à l'article des propriétés antistatiques, même si le revêtement antistatique est intercalé entre deux revêtements ou substrats non antistatiques.

Par "antistatique", on entend la propriété de ne pas retenir et/ou développer une charge électrostatique appréciable. Un article est généralement considéré comme ayant des propriétés antistatiques acceptables, lorsqu'il n'attire et ne fixe pas la poussière et les petites particules après que l'une de ses surfaces a été frottée au moyen d'un chiffon approprié. Il est capable de dissiper rapidement des charges électrostatiques accumulées, si bien qu'un tel article paraît plus "propre" après essuyage.

Différentes techniques pour quantifier les propriétés antistatiques d'un matériau peuvent être utilisées.

La propriété antistatique d'un matériau est souvent liée au potentiel statique de celui-ci. Lorsque le potentiel statique du matériau (mesuré alors que l'article n'a pas été chargé) est de 0 KV +/- 0,1 KV (en valeur absolue), le matériau est antistatique, en revanche lorsque son potentiel statique est différent de 0 KV +/- 0,1 KV (en valeur absolue), le matériau est dit statique.

Selon une autre technique, la capacité d'un verre à évacuer une charge statique obtenue après frottement par un tissu ou par tout autre procédé de génération d'une charge électrostatique (charge appliquée par corona...) peut être quantifiée par une mesure du temps de dissipation de ladite charge. Dans la présente demande, un verre est considéré comme antistatique si son temps de décharge est inférieur ou égal à 500 millisecondes. Les verres statiques peuvent posséder des temps de décharge de l'ordre de plusieurs dizaines de secondes et, lorsqu'ils viennent d'être essuyés, peuvent attirer les poussières environnantes pendant tout le temps nécessaire à leur décharge.

Les revêtements antistatiques connus comprennent au moins un agent antistatique, qui est généralement un oxyde métallique (semi-)conducteur éventuellement dopé, tel que l'oxyde d'étain-indium (ITO), l'oxyde de zinc.

L'oxyde d'étain-indium (ITO) est le matériau le plus utilisé. Il peut s'agir d'oxyde d'étain dopé à l'indium ou d'oxyde d'indium dopé à l'étain. Généralement, le matériau le plus communiqué est l'oxyde d'indium dopé à l'étain, l'étain étant utilisé à raison de 5 à 17% en poids.

Les demandes ou brevets EP 0834092, DE 3942990, DE 4117257 , US 6,852,406, US 2008/028984 et US 2002/018887 décrivent des articles d'optique, notamment des lentilles ophtalmiques, équipées d'un empilement antireflet de nature minérale comprenant une couche électriquement conductrice transparente de nature minérale déposée sous vide, à base d'oxyde de titane, d'oxyde d'étain-indium (ITO), d'oxyde de zinc, d'oxyde d'étain, etc. La couche d'ITO décrite dans le brevet US 6,852,406 est généralement formée à partir d'une source comprenant 90 % d'oxyde d'indium et 10 % d'oxyde d'étain.

La demande WO 2009/004222 (FR2917510), au nom du déposant, décrit un article d'optique à propriétés antireflet, comprenant un substrat ayant au moins une surface principale revêtue d'un revêtement antireflet pouvant comprendre au moins une couche électriquement conductrice. Cette couche comprend de préférence un oxyde métallique choisi parmi les oxydes d'indium, d'étain, de zinc et leurs mélanges, le matériau préféré étant l'oxyde d'étain-indium (ITO).

Cependant, les revêtements antireflet comprenant une couche antistatique à base d'ITO ne donnent pas entièrement satisfaction.

Les couches antistatiques à base d'ITO présentent l'inconvénient d'absorber dans le domaine visible de façon non négligeable, si bien que leur épaisseur doit être relativement faible afin de ne pas nuire aux propriétés de transparence d'un article d'optique. Ainsi, les couches d'ITO présentent un niveau de jaune légèrement trop élevé lorsqu'elles sont déposées sur certains substrats tels que le substrat ORMA®, ce qui est visible à l'œil nu si la couche d'ITO a une épaisseur supérieure à 6,5 nm.

Mais le défaut le plus gênant lié à l'utilisation de couches antistatiques conductrices, en particulier de couches d'ITO, est l'apparition de défauts appelés défauts cosmétiques sur l'article d'optique au bout d'un temps relativement court après la préparation de l'article d'optique à propriétés antireflet et antistatique. De tels défauts empêchent la commercialisation des articles d'optique sur lesquels ils sont observés. Selon les substrats, ces défauts sont présents initialement ou se développent au bout d'une durée pouvant aller de quelques jours à quelques mois, au cours du port des lentilles ophtalmiques. Ces défauts se présentent sous la forme de points ou de lignes à la surface de l'article.

Les couches conductrices sont généralement déposées sous assistance ionique. Les inventeurs ont déterminé que cette assistance ionique renforçait significativement le taux d'apparition de défauts.

Le problème de l'apparition de défauts cosmétiques n'a été abordé dans aucun des documents présentés ci-dessus.

La présente invention a donc pour objectif de fournir un article d'optique transparent, notamment une lentille ophtalmique, possédant à la fois des propriétés antistatiques et antireflet ou réfléchissantes, éventuellement des propriétés anti-abrasion et/ou anti-rayures et/ou antichoc, mais qui ne développe pas au cours du temps de défauts cosmétiques, et qui conserve d'excellentes propriétés d'adhésion des différentes couches de revêtement les unes aux autres.

Un autre objectif de l'invention est l'obtention d'un article d'optique dont les propriétés antistatiques sont stables dans le temps.

La présente invention a encore pour but un procédé de fabrication d'un article tel que défini ci-dessus qui s'intègre aisément dans le processus classique de fabrication desdits articles tout en ne comprenant pas d'étape de chauffage du substrat.

Les inventeurs ont déterminé qu'il fallait agir sur la nature du matériau constituant la couche antistatique et retenir un matériau spécifique pour résoudre le problème technique. Ce problème ne peut pas être résolu en modifiant la localisation du revêtement antistatique dans l'empilement.

Les inventeurs ont également déterminé la caractéristique des substrats enclins à développer ce type de défauts, une fois revêtus d'un revêtement antireflet (ou réfléchissant) antistatique, et quels substrats ne présentaient pas ce type de défaut, quelle que soit la nature de la couche antistatique.

La présente invention réside dans le fait que l'utilisation, dans un revêtement antireflet ou réfléchissant, de certaines couches antistatiques à base de $SnO_2$, ne provoque pas de défauts cosmétiques sur des substrats dont le taux de reprise en eau est supérieur à 0,6 % en masse et préserve ainsi la transparence, en particulier dans le temps, dudit revêtement, empêchant son altération.

Les buts fixés sont donc atteints selon l'invention par un article d'optique à propriétés antistatiques et antireflet ou réfléchissantes, comprenant un substrat ayant au moins une surface principale revêtue d'un revêtement antireflet ou réfléchissant, ledit revêtement comprenant au moins une couche électriquement conductrice comprenant au moins 30 %, de préférence au moins 40% et mieux au moins 50% en masse d'oxyde d'étain ($SnO_2$) par rapport à la masse totale de la couche électriquement conductrice, le dépôt de ladite couche électriquement conductrice ayant été réalisé sous assistance ionique, et ledit substrat ayant un taux de reprise en eau supérieur ou égal à 0,6 % en masse par rapport à la masse totale dudit substrat, le taux de reprise en eau étant mesuré après séchage préalable dudit substrat puis stockage de ce substrat pendant 800 heures dans une enceinte à 50°C sous une humidité relative de 100 % et à pression atmosphérique.

L'invention concerne également un procédé de fabrication d'un tel article d'optique, comprenant au moins les étapes suivantes :

- fournir un article d'optique comprenant un substrat ayant au moins une surface principale, ledit substrat ayant un taux de reprise en eau supérieur ou égal à 0,6 % en masse par rapport à la masse totale dudit substrat, le taux de reprise en eau étant mesuré de la façon décrite ci-dessus;

- déposer sur ladite surface principale du substrat un revêtement antireflet ou réfléchissant, ledit revêtement comprenant au moins une couche électriquement conductrice, comprenant au moins 30 % en masse d'oxyde d'étain ($SnO_2$) par rapport à la masse totale de la couche électriquement conductrice, le dépôt de ladite couche électriquement conductrice étant réalisé sous assistance ionique,
- récupérer un article d'optique comprenant un substrat ayant une surface principale revêtue dudit revêtement antireflet ou réfléchissant qui comporte ladite couche électriquement conductrice.

La suite de la description se réfère essentiellement à des revêtements antireflet mais s'applique aussi à des revêtements réfléchissants, mutatis mutandis. L'invention s'applique toutefois de façon préférentielle à des revêtements antireflet.

Dans la présente demande, lorsqu'un article d'optique comprend un ou plusieurs revêtements à sa surface, l'expression "déposer une couche ou un revêtement sur l'article" signifie qu'une couche ou un revêtement est déposé sur la surface à découvert (exposée) du revêtement externe de l'article, c'est-à-dire son revêtement le plus éloigné du substrat.

Un revêtement qui est "sur" un substrat ou qui a été déposé "sur" un substrat est défini comme un revêtement qui (i) est positionné au-dessus du substrat, (ii) n'est pas nécessairement en contact avec le substrat, c'est-à-dire qu'un ou plusieurs revêtements intermédiaires peuvent être disposés entre le substrat et le revêtement en question, et (iii) ne recouvre pas nécessairement le substrat complètement. Lorsque "une couche 1 est localisée sous une couche 2", on comprendra que la couche 2 est plus éloignée du substrat que la couche 1.

L'article d'optique préparé selon l'invention comprend un substrat, de préférence transparent, ayant des faces principales avant et arrière, l'une au moins desdites faces principales comportant un revêtement antireflet antistatique, de préférence les deux faces principales.

Par face arrière (généralement concave) du substrat, on entend la face qui, lors de l'utilisation de l'article, est la plus proche de l'œil du porteur. Inversement, par face avant (généralement convexe) du substrat, on entend la face qui, lors de l'utilisation de l'article, est la plus éloignée de l'œil du porteur.

Bien que l'article selon l'invention puisse être un article d'optique quelconque, tel qu'un écran ou un miroir, il est de préférence une lentille optique, mieux une lentille ophtalmique, pour lunettes, ou une ébauche de lentille optique ou ophtalmique. La lentille peut être une lentille polarisée, colorée ou une lentille photochrome. Préférentiellement, la lentille ophtalmique selon l'invention présente une transmission élevée.

Le revêtement antireflet selon l'invention peut être formé sur au moins l'une des faces principales d'un substrat nu, c'est-à-dire non revêtu, ou sur au moins l'une des faces principales d'un substrat déjà revêtu d'un ou plusieurs revêtements fonctionnels.

Le substrat de l'article d'optique selon l'invention est nécessairement un verre organique, par exemple en matière plastique thermoplastique ou thermodurcissable.

Il doit présenter un taux de reprise en eau supérieur ou égal à 0,6 % en masse par rapport à la masse totale dudit substrat, de préférence supérieur ou égal à 0,7 %, le taux de reprise en eau étant mesuré après séchage préalable dudit substrat puis stockage de ce substrat pendant 800 heures dans une enceinte à 50°C sous une humidité relative de 100 % et à pression atmosphérique. Les inventeurs ont en effet constaté que les substrats présentant un taux de reprise en eau inférieur à 0,6 % en masse dans les conditions de test ci-dessus ne donnaient pas lieu à l'apparition de défauts cosmétiques.

La détermination du taux de reprise en eau d'un substrat fait appel à des procédures classiques, bien connues de l'homme du métier et qui ne présentent aucune difficulté de mise en oeuvre. Elles sont décrites en détail dans la partie expérimentale.

Le substrat de l'article d'optique de l'invention peut être choisi parmi les familles de matériaux suivants, à condition qu'ils vérifient la caractéristique de taux de reprise en eau indiquée ci-dessus : les (co)polymères (méth)acryliques, en particulier le poly(méthacrylate de méthyle) (PMMA), les (co)polymères thio(méth)acryliques, le polyvinylbutyral (PVB), les polyuréthanes (PU), les poly(thiouréthanes), les (co)polymères d'allylcarbonates de polyols, les copolymères thermoplastiques éthylène/acétate de vinyle, les polyesters tels que le poly(téréphtalate d'éthylène) (PET) ou le poly(téréphtalate de butylène) (PBT), les polyépoxydes, les copolymères polycarbonates/polyesters, les copolymères de cyclo-oléfines tels que les copolymères éthylène/norbornène ou éthylène/cyclopentadiène et leurs combinaisons. Bien évidemment, les substrats peuvent être obtenus par polymérisation de mélanges de monomères, ou peuvent encore comprendre des mélanges de ces polymères et copolymères.

Des classes de substrats particulièrement préférées sont les poly(thiouréthanes), les polyépisulfures et les résines résultant de la polymérisation ou copolymérisation de bis allyl carbonates d'alkylène glycols, à condition qu'ils présentent un taux de reprise en eau supérieur ou égal à 0,6 %.

Des exemples de substrats convenant pour l'invention sont les substrats obtenus à partir des résines de MR6®,

MR7® et MR8® (résines polythiouréthanes thermodurcissables). Les différents substrats à base de résines polythiouréthane sont commercialisés par Mitsui Toatsu Chemicals et ces substrats ainsi que les monomères servant à leur préparation sont notamment décrits dans les brevets US 4,689,387, US 4,775,733, US 5,059,673, US 5,087,758 et US 5,191,055.

Les substrats obtenus par (co)polymérisation du bis allyl carbonate du diéthylèneglycol conviennent également (lentilles ORMA® ESSILOR). Le monomère de base pour leur synthèse est vendu, par exemple, sous la dénomination commerciale CR-39® par la société PPG Industries.

Des exemples de substrats ne convenant pas pour l'invention, car ils présentent un taux de reprise en eau très inférieur à 0,6 %, sont les substrats minéraux (verres à base de silice), le substrat 1,74®, qui est à base d'une résine polyépisulfure, et les substrats en résine homopolycarbonate de bisphénol-A, commercialisés notamment par TEIJIN sous la marque PANLITE®, par GENERAL ELECTRIC COMPANY sous la marque LEXAN®, par BAYER sous la marque BAYBLEND®, par MOBAY CHEMICHAL Corp. sous la marque MAKROLON® et par DOW CHEMICAL Co. sous la marque CALIBRE®.

Avant le dépôt du revêtement antireflet sur le substrat éventuellement revêtu, par exemple d'un revêtement anti-abrasion et/ou anti-rayures, il est courant de soumettre la surface dudit substrat, éventuellement revêtue, à un traitement d'activation physique ou chimique, destiné à augmenter l'adhésion du revêtement antireflet. Ce pré-traitement est généralement conduit sous vide. Il peut s'agir d'un bombardement avec des espèces énergétiques et/ou réactives, par exemple un faisceau d'ions ("Ion Pre-Cleaning" ou "IPC") ou un faisceau d'électrons, d'un traitement par décharge corona, par effluvage, d'un traitement UV, ou d'un traitement par plasma sous vide, généralement un plasma d'oxygène ou d'argon. Il peut également s'agir d'un traitement de surface acide ou basique et/ou par solvants (eau ou solvant organique). Plusieurs de ces traitements peuvent être combinés. Grâce à ces traitements de nettoyage, la propreté et la réactivité de la surface du substrat sont optimisées.

Par espèces énergétiques (et/ou réactives), on entend notamment des espèces ioniques ayant une énergie allant de 1 à 300 eV, préférentiellement de 1 à 150 eV, mieux de 10 à 150 eV, et mieux encore de 40 à 150 eV. Les espèces énergétiques peuvent être des espèces chimiques telles que des ions, des radicaux, ou des espèces telles que des photons ou des électrons.

Le pré-traitement préféré de la surface du substrat est un traitement par bombardement ionique, effectué au moyen d'un canon à ions, les ions étant des particules constituées d'atomes de gaz dont on a extrait un ou plusieurs électron(s). On utilise de préférence en tant que gaz ionisé l'argon (ions $Ar^+$), mais également l'oxygène, ou leurs mélanges, sous une tension d'accélération allant généralement de 50 à 200 V, une densité de courant généralement comprise entre 10 et 100 $\mu A/cm^2$ sur la surface activée, et généralement sous une pression résiduelle dans l'enceinte à vide pouvant varier de $8.10^{-5}$ mbar à $2.10^{-4}$ mbar.

L'article d'optique selon l'invention comporte un revêtement antireflet (ou réfléchissant), formé de préférence sur un revêtement anti-abrasion.

Hormis la ou les couches à base d'oxyde d'étain qu'il comporte, le revêtement antireflet ou réfléchissant peut être tout revêtement antireflet ou réfléchissant classiquement utilisé dans le domaine de l'optique, en particulier de l'optique ophtalmique.

Un revêtement antireflet se définit comme un revêtement, déposé à la surface d'un article d'optique, qui améliore les propriétés anti-réfléchissantes de l'article d'optique final. Il permet de réduire la réflexion de la lumière à l'interface article-air sur une portion relativement large du spectre visible.

Un revêtement réfléchissant réalise l'effet inverse, c'est-à-dire qu'il augmente la réflexion des rayons lumineux. Un tel type de revêtement est utilisé par exemple, pour obtenir un effet miroir dans des lentilles solaires. Les revêtements antireflet ou réfléchissants peuvent aussi posséder une ou plusieurs couches absorbant dans le spectre visible, conduisant à des articles d'optique utilisables pour des lunettes solaires.

Comme cela est bien connu également, les revêtements antireflet comprennent classiquement un empilement monocouche ou multicouches de matériaux diélectriques. Ce sont de préférence des revêtements multicouches, comprenant des couches de haut indice de réfraction (HI) et des couches de bas indice de réfraction (BI).

Les revêtements réfléchissants sont constitués de couches de même nature que les revêtements antireflet, mais les indices de réfraction, le nombres et l'épaisseur des couches sont choisis de façon à ce que le revêtement présente un effet réfléchissant, ce qui est bien connu de l'homme de l'art.

Dans la présente demande, une couche du revêtement antireflet est dite couche de haut indice de réfraction lorsque son indice de réfraction est supérieur à 1,55, de préférence supérieur ou égal à 1,6, mieux supérieur ou égal à 1,8 et encore mieux supérieur ou égal à 2,0. Une couche d'un revêtement antireflet est dite couche de bas indice de réfraction lorsque son indice de réfraction est inférieur ou égal à 1,55, de préférence inférieur ou égal à 1,50, mieux inférieur ou égal à 1,45. Sauf indication contraire, les indices de réfraction auxquels il est fait référence dans la présente invention sont exprimés à 25 °C pour une longueur d'onde de 550 nm.

Les couches HI sont des couches de haut indice de réfraction classiques, bien connues dans la technique. Elles comprennent généralement un ou plusieurs oxydes minéraux tels que, sans limitation, la zircone ($ZrO_2$), l'oxyde

de titane ($TiO_2$), le pentoxyde de tantale ($Ta_2O_5$), l'oxyde de néodyme ($Nd_2O_5$), l'oxyde de praséodyme ($Pr_2O_3$), le titanate de praséodyme ($PrTiO_3$), $La_2O_3$, $Dy_2O_5$, $Nb_2O_5$, $Y_2O_3$. Selon un mode de réalisation de l'invention, une couche à base de $SnO_2$ conforme à l'invention constitue une couche HI du revêtement antireflet. Les matériaux préférés sont $TiO_2$, $PrTiO_3$, $ZrO_2$, $SnO_2$ et leurs mélanges.

Selon un mode de réalisation particulier de l'invention, au moins une couche HI du revêtement antireflet est une couche à base de $TiO_2$, dont l'indice de réfraction élevé est particulièrement intéressant. Elle est de préférence déposée sous assistance ionique (IAD), ce qui augmente la compression de cette couche et par là son indice de réfraction.

Selon un autre mode de réalisation particulier de l'invention, au moins une couche HI du revêtement antireflet est une couche à base de $PrTiO_3$, dont la résistance thermique élevée est particulièrement intéressante.

Les couches BI sont également bien connues et peuvent comprendre, sans limitation, $SiO_2$, $MgF_2$, $ZrF_4$, de l'alumine ($Al_2O_3$), en faible proportion, $AlF_3$, de la chiolite ($Na_3Al_3F_{14}$]), de la cryolite ($Na_3[AlF_6]$), et leurs mélanges, de préférence $SiO_2$ ou $SiO_2$ dopé avec de l'alumine, lequel contribue à augmenter la résistance thermique du revêtement antireflet. On peut également utiliser des couches SiOF ($SiO_2$ dopé au fluor).

Lorsqu'une couche BI comprenant un mélange de $SiO_2$ et d'$Al_2O_3$ est utilisée, elle comprend préférentiellement de 1 à 10 %, mieux de 1 à 8 % et encore mieux de 1 à 5 % en masse d'$Al_2O_3$ par rapport à la masse totale de $SiO_2$ + $Al_2O_3$ dans cette couche. Une proportion trop importante d'alumine peut être défavorable à l'adhésion du revêtement AR et augmenterait trop l'indice de réfraction de cette couche. Selon un mode de réalisation préférentiel, au moins une couche BI du revêtement antireflet comprend un mélange de $SiO_2$ et d'$Al_2O_3$, de préférence consiste en un mélange de $SiO_2$ et d'$Al_2O_3$.

Un mode de réalisation préférentiel de l'invention consiste à utiliser une ou plusieurs couches BI comprenant un mélange de $SiO_2$ et d'$Al_2O_3$ dans les revêtements antireflet selon l'invention, permettant d'obtenir des revêtements antireflet à la fois antistatiques et possédant une température critique améliorée, c'est à dire, présentant une bonne résistance à la craquelure lorsqu'ils sont soumis à une élévation de température.

Les inventeurs ont constaté que, dans les empilements de l'invention, la présence d'une ou plusieurs couches BI comprenant un mélange de $SiO_2$ et d'$Al_2O_3$ pouvait contribuer et même renforcer très significativement la présence de défauts cosmétiques. Les inventeurs ont trouvé qu'il convenait préférentiellement de déposer ces couches mixtes $SiO_2$/$Al_2O_3$ en introduisant dans l'enceinte de dépôt, lors du dépôt de celles-ci, un gaz, préférentiellement un gaz rare comme l'argon, le xénon, le krypton, le néon ou bien de l'oxygène ou un mélange de deux ou plus de ces gaz.

Ainsi, l'invention fournit un revêtement antireflet préférentiel, comportant au moins une couche électroconductrice comprenant au moins 30 % en masse de $SnO_2$ et au moins une couche de bas indice de réfraction $SiO_2$/$Al_2O_3$ déposée avec apport de gaz dans l'enceinte à vide pendant ledit dépôt.

Cet apport de gaz permet de réguler la pression dans l'enceinte de dépôt au cours du dépôt de la couche de $SiO_2$/$Al_2O_3$. La gamme de pression recommandée dans l'enceinte pendant l'apport du ou des gaz varie généralement de $5.10^{-5}$ à $3.10^{-4}$ mbar, préférentiellement $1.10^{-4}$ à $3.10^{-4}$ mbar et mieux $1,5.10^{-4}$ à $3.10^{-4}$ mbar.

Cet apport de gaz est différent d'un traitement de bombardement ionique tel qu'une assistance ionique (IAD), et se distingue aussi d'une étape d'évaporation de matériaux tels que $SiO_2$ et $Al_2O_3$.

Généralement, les couches HI ont une épaisseur physique variant de 10 à 120 nm, et les couches BI ont une épaisseur physique variant de 10 à 100 nm.

Préférentiellement, l'épaisseur totale du revêtement antireflet est inférieure à 1 micromètre, mieux inférieure ou égale à 800 nm et mieux encore inférieure ou égale à 500 nm. L'épaisseur totale du revêtement antireflet est généralement supérieure à 100 nm, de préférence supérieure à 150 nm.

De préférence encore, le revêtement antireflet comprend au moins deux couches de bas indice de réfraction (BI) et au moins deux couches de haut indice de réfraction (HI). Préférentiellement, le nombre total de couches du revêtement antireflet est inférieur ou égal à 8, mieux inférieur ou égal à 6.

Il n'est pas nécessaire que les couches HI et BI soient alternées dans le revêtement antireflet, bien qu'elles puissent l'être selon un mode de réalisation de l'invention. Deux couches HI (ou plus) peuvent être déposées l'une sur l'autre, tout comme deux couches BI (ou plus) peuvent être déposées l'une sur l'autre.

Selon un mode de réalisation de l'invention, le revêtement antireflet comprend une sous-couche. Elle constitue dans ce cas généralement la première couche de ce revêtement antireflet dans l'ordre de dépôt des couches, c'est-à-dire la couche du revêtement antireflet qui est au contact du revêtement sous-jacent (qui est généralement le revêtement anti-abrasion et anti-rayures) ou du substrat, lorsque le revêtement antireflet est directement déposé sur le substrat, sauf dans le cas particulier où une couche à base d'oxyde d'étain selon l'invention constitue la première couche du revêtement antireflet.

Par sous-couche du revêtement antireflet (ou réfléchissant), ou couche d'adhésion, on entend un revêtement d'épaisseur relativement importante, utilisé dans le but d'améliorer la résistance à l'abrasion et/ou aux rayures dudit revêtement et/ou de promouvoir son adhésion au substrat ou au revêtement sous-jacent.

Compte tenu de son épaisseur relativement importante, la sous-couche ne participe généralement pas à l'activité optique anti-réfléchissante (ou réfléchissante), en particulier dans le cas où elle possède un indice de réfraction proche du substrat nu, si la sous-couche est déposée sur le substrat nu, ou du revêtement si la sous-couche est déposée sur un substrat revêtu. Dans le reste de la description, on distinguera la sous-couche des couches du revêtement antireflet déposées sur cette sous-couche, en qualifiant ces dernières de couches optiques, par opposition à la sous-couche qui ne constitue pas une couche ayant un effet optique.

La sous-couche doit avoir une épaisseur suffisante pour promouvoir la résistance à l'abrasion du revêtement antireflet, mais de préférence pas trop importante pour ne pas provoquer une absorption lumineuse qui, selon la nature de la sous-couche, pourrait réduire significativement le facteur relatif de transmission $\tau_v$.

La sous-couche comprend de préférence une couche à base de $SiO_2$, d'épaisseur de préférence supérieure ou égale à 75 nm, de préférence encore supérieure ou égale à 80 nm, mieux supérieure ou égale à 100 nm et encore mieux supérieure ou égale à 150 nm. Son épaisseur est généralement inférieure à 250 nm, mieux inférieure à 200 nm. Selon un mode de réalisation particulier, la sous-couche consiste en une couche de $SiO_2$.

Ladite couche à base de $SiO_2$ peut comprendre, en plus de la silice, un ou plusieurs autres matériaux conventionnellement utilisés pour la fabrication de sous-couches, par exemple un ou plusieurs matériaux choisis parmi les matériaux diélectriques décrits précédemment dans la présente description.

Il est préférable d'utiliser une sous-couche de type monocouche. Toutefois, la sous-couche peut être laminée (multicouches). Les sous-couches utilisables dans le cadre de la présente invention sont décrites plus en détail dans les demandes WO 2008/107325 et WO 2009/004222, qui sont incorporées ici par référence.

Les différentes couches du revêtement antireflet (dont fait partie la couche antistatique) sont préférentiellement déposées par dépôt sous vide selon l'une des techniques suivantes : i) par évaporation, éventuellement assistée par faisceau ionique ; ii) par pulvérisation par faisceau d'ion ; iii) par pulvérisation cathodique ; iv) par dépôt chimique en phase vapeur assisté par plasma. Ces différentes techniques sont décrites dans les ouvrages "Thin Film Processes" and "Thin Film Processes II," Vossen & Kern, Ed., Academic Press, 1978 et 1991 respectivement. Une technique particulièrement recommandée est la technique d'évaporation sous vide.

De préférence, le dépôt de chacune des couches du revêtement antireflet est réalisé par évaporation sous vide.

Il est possible de réaliser une étape de traitement avec des espèces énergétiques telles que définies précédemment, de façon concomitante au dépôt d'une ou plusieurs des différentes couches du revêtement antireflet.

La technique du dépôt sous assistance ionique ou "IAD" (pour Ion Assisted Déposition) est décrite notamment dans la demande de brevet US 2006/017011 et le brevet US 5,268,781. Elle ne nécessite pas de chauffage des substrats, ce qui est intéressant pour le revêtement de substrats thermosensibles tels que des substrats en verre organique.

L'évaporation sous assistance ionique, consiste à déposer un film d'un matériau sur un substrat par évaporation sous vide en bombardant simultanément la surface du substrat avec un faisceau d'ions émis par un canon à ions, les ions étant des particules constituées d'atomes de gaz dont on a extrait un ou plusieurs électron(s). Le bombardement ionique provoque un réarrangement atomique dans la couche en cours de dépôt, ce qui permet de la tasser pendant qu'elle est en train d'être formée. Outre une densification, l'IAD permet d'améliorer l'adhérence des couches déposées et d'augmenter leur indice de réfraction.

Elle consiste préférentiellement en un bombardement de la surface à traiter par des ions oxygène, d'une densité de courant généralement comprise entre 10 et 200 $\mu A/cm^2$, de préférence entre 30 et 100 $\mu A/cm^2$ sur la surface activée et généralement sous une pression résiduelle dans l'enceinte à vide pouvant varier de $6.10^{-5}$ mbar à $2.10^{-4}$ mbar, préférentiellement de $8.10^{-5}$ mbar à $2.10^{-4}$ mbar. D'autres gaz ionisés peuvent être employés en combinaison ou non avec l'oxygène, comme par exemple l'argon, l'azote, notamment un mélange d'$O_2$ et d'argon dans un ratio volumique 2:1 à 1:2.

De façon optionnelle, des traitements d'activation physique ou chimique peuvent être réalisés sur la surface d'une ou plusieurs couches du revêtement antireflet avant le dépôt de la couche ultérieure, en particulier sur la surface de l'avant dernière couche de ce revêtement et/ou sur la surface de la sous-couche, lorsqu'elle est présente.

Le traitement d'activation physique ou chimique peut être choisi parmi les prétraitements auxquels le substrat peut être soumis et qui ont déjà été présentés ci-dessus. Le pré-traitement préféré est un bombardement ionique. Habituellement conduit sous vide, en utilisant par exemple un faisceau d'ions argon généré à l'aide d'un canon à ions, il permet généralement d'une part d'améliorer les propriétés de résistance à l'abrasion du revêtement antireflet, et d'autre part d'augmenter ses propriétés d'adhésion.

Les revêtements antireflet utilisables et leurs modes de préparations sont décrits de façon plus détaillée dans la demande WO 2009/004222, qui est incorporée ici par référence.

L'article de l'invention est rendu antistatique grâce à l'incorporation, dans le revêtement antireflet, d'au moins une couche électriquement conductrice comprenant au moins 30%, de préférence au moins 40% et mieux au moins 50% en masse d'oxyde d'étain ($SnO_2$) par rapport à la masse totale de la couche électriquement conductrice. Cette couche est couramment nommée dans la présente demande "couche à base d'oxyde d'étain."

De préférence, la proportion massique d'oxyde d'étain dans ladite couche électriquement conductrice est supérieure ou égale à l'une des valeurs suivantes : 70%, 75 %, 80 %, 90 %, 95 %, 97 %, 99 %, 99,5 %, 99,9 %, 99,95 %. Idéalement, ladite couche électriquement conductrice consiste en une couche de $SnO_2$.

Ladite couche à base d'oxyde d'étain selon l'invention peut contenir d'autres constituants, notamment des oxydes métalliques, en particulier des oxydes métalliques électriquement conducteurs, qui sont de préférence hautement transparents. Elle peut notamment comprendre de l'oxyde de titane et/ou de l'oxyde de zinc.

De préférence, la couche électriquement conductrice de l'invention ne contient pas d'indium, quelle que soit sa forme, par exemple d'indium métallique ou d'oxyde d'indium.

La couche électriquement conductrice peut être localisée à différents endroits du revêtement antireflet, pourvu que ses propriétés anti-réfléchissantes ne soient pas perturbées. Elle peut par exemple être déposée sur la sous-couche (lorsqu'elle est présente), c'est-à-dire être intercalée entre la sous-couche et les autres couches du revêtement antireflet. Elle peut aussi être déposée sous la sous-couche (lorsqu'elle est présente), c'est-à-dire être intercalée entre la sous-couche et le substrat éventuellement revêtu de revêtements fonctionnels. Plus généralement, elle peut constituer la première couche du revêtement antireflet (dans l'ordre de dépôt), c'est-à-dire être directement déposée sur le substrat éventuellement revêtu de revêtements fonctionnels. Elle est de préférence localisée entre deux couches diélectriques optiques du revêtement antireflet, et/ou sous une couche optique de bas indice de réfraction du revêtement antireflet. Dans le mode de réalisation optimal de l'invention, la couche à base de $SnO_2$ constitue l'avant dernière couche du revêtement antireflet dans l'ordre d'empilement, la dernière couche dudit revêtement antireflet étant de préférence une couche BI.

Selon un mode de réalisation particulier de l'invention, ladite couche à base de $SnO_2$ ne constitue pas la dernière couche (couche externe) du revêtement antireflet. Selon un autre mode de réalisation particulier de l'invention, ladite couche à base de $SnO_2$ ne constitue pas la première couche du revêtement antireflet.

La couche électriquement conductrice doit être suffisamment fine pour ne pas altérer la transparence du revêtement antireflet. Généralement, son épaisseur varie de 0,1 à 150 nm, mieux de 0,1 à 50 nm. Une épaisseur inférieure à 0,1 nm ne permet généralement pas d'obtenir une conductivité électrique suffisante, alors qu'une épaisseur supérieure à 150 nm ne permet généralement pas d'obtenir les caractéristiques de transparence et de faible absorption requises. Son épaisseur varie de préférence de 0,1 à 30 nm, mieux de 1 à 20 nm et encore mieux de 1 à 15 nm. Selon un mode de réalisation de l'invention, l'épaisseur de ladite couche électriquement conductrice est supérieure ou égale à 6 nm. Toutes les épaisseurs indiquées dans la présente demande sont des épaisseurs physiques.

Généralement, la couche électriquement conductrice à base de $SnO_2$ contribue à l'obtention de propriétés anti-réfléchissantes, particulièrement lorsqu'elle n'est pas localisée en dessous d'une éventuelle sous-couche, et constitue une couche de haut indice de réfraction dans le revêtement antireflet (indice de réfraction de l'ordre de 2).

Selon une caractéristique essentielle de l'invention, le dépôt de ladite couche électriquement conductrice est réalisé sous assistance ionique, technique qui a été décrite précédemment afin de réduire l'absorption dans le visible de la couche à base de $SnO_2$ et obtenir une bonne adhésion.

Les inventeurs ont constaté qu'il était possible d'augmenter la force du bombardement ionique lors du dépôt d'une couche conductrice contenant une teneur suffisante en $SnO_2$ sans augmenter de façon significative la fréquence des défauts cosmétiques apparaissant ultérieurement, alors qu'au contraire une telle augmentation de la force du bombardement ionique engendre généralement un accroissement important des défauts cosmétiques pour les couches soumises à un tel bombardement, en particulier des couches conductrices à base d'oxydes métalliques conducteurs. De manière particulièrement avantageuse, le revêtement antireflet comprend, outre au moins une, de préférence une seule, couche électriquement conductrice qui confère des propriétés antistatiques à l'article, au moins quatre couches diélectriques, de préférence quatre ou cinq.

Selon un mode de réalisation préféré, le revêtement antireflet de l'invention comprend, dans l'ordre de dépôt sur la surface du substrat éventuellement revêtu, une couche de $ZrO_2$, généralement de 10 à 40 nm d'épaisseur et préférentiellement de 15 à 35 nm, une couche de $SiO_2$ ou de $SiO_2/Al_2O_3$, généralement de 10 à 40 nm d'épaisseur et préférentiellement de 15 à 35 nm, une couche de $ZrO_2$ ou de $TiO_2$, généralement de 40 à 150 nm d'épaisseur, préférentiellement de 50 à 120 nm, une couche à base de $SnO_2$ selon l'invention, de préférence une couche de $SnO_2$, généralement de 4 à 25 nm d'épaisseur et préférentiellement de 5 à 20 nm, et une couche de $SiO_2$ ou de $SiO_2/Al_2O_3$, généralement de 40 à 150 nm d'épaisseur, préférentiellement de 50 à 100 nm.

Le revêtement antireflet peut être déposé directement sur un substrat nu. Dans certaines applications, il est préférable que la surface principale du substrat soit revêtue d'un ou plusieurs revêtements fonctionnels préalablement au dépôt du revêtement antireflet de l'invention. Ces revêtements fonctionnels classiquement utilisés en optique peuvent être, sans limitation, une couche de primaire antichoc, un revêtement anti-abrasion et/ou anti-rayures, un revêtement polarisé, un revêtement photochrome ou un revêtement coloré, en particulier une couche de primaire antichoc revêtue d'une couche anti-abrasion et/ou anti-rayures.

Le revêtement antireflet est de préférence déposé sur un revêtement anti-abrasion et/ou anti-rayures. Le revêtement anti-abrasion et/ou anti-rayures peut être toute couche classiquement utilisée comme revêtement anti-abrasion et/ou anti-rayures dans le domaine des lentilles ophtalmiques.

Les revêtements résistant à l'abrasion et/ou aux rayures sont de préférence des revêtements durs à base de poly(méth)acrylates ou de silanes comprenant généralement une ou plusieurs charges minérales destinées à augmenter la dureté et/ou l'indice de réfraction du revêtement une fois durci. Par (méth)acrylate, on entend un acrylate ou un méthacrylate.

Les revêtements durs anti-abrasion et/ou anti-rayures sont de préférence élaborés à partir de compositions comprenant au moins un alcoxysilane et/ou un hydrolysat de celui-ci, obtenu par exemple par hydrolyse avec une solution d'acide chlorhydrique, et optionnellement des catalyseurs de condensation et/ou de durcissement et/ou des tensioactifs.

Parmi les revêtements recommandés dans la présente invention, on peut citer les revêtements à base d'hydrolysats d'époxysilanes tels que ceux décrits dans les brevets EP 0614957, US 4,211,823 et US 5,015,523.

De nombreux exemples de catalyseurs de condensation et/ou de durcissement utilisables sont donnés dans les ouvrages "Chemistry and Technology of the Epoxy Resins", B. Ellis (Ed.) Chapman Hall, New York, 1993 et "Epoxy Resins Chemistry and Technology" 2éme édition, C. A. May (Ed.), Marcel Dekker, New York, 1988**.**

Une composition pour revêtement anti-abrasion et/ou anti-rayures préférée est celle divulguée dans le brevet EP 0614957, au nom du déposant. Elle est décrite dans la partie expérimentale.

La composition de revêtement anti-abrasion et/ou anti-rayures peut être déposée sur la surface principale du substrat par trempage ou centrifugation. Elle est ensuite durcie par la voie appropriée (de préférence thermique, ou UV).

L'épaisseur du revêtement anti-abrasion et/ou anti-rayures varie généralement de 2 à 10 $\mu$m, préférentiellement de 3 à 5 $\mu$m.

Préalablement au dépôt du revêtement anti-abrasion et/ou anti-rayures, il est possible de déposer sur le substrat un revêtement de primaire améliorant la résistance au choc et/ou l'adhésion des couches ultérieures dans le produit final.

Ce revêtement peut être toute couche de primaire antichoc classiquement utilisée pour les articles en matériau polymère transparent, tels que des lentilles ophtalmiques.

Parmi les compositions de primaire préférées, on peut citer les compositions à base de polyuréthanes thermoplastiques, telles que celles décrites dans les brevets JP 63-141001 et JP 63-87223, les compositions de primaire poly(méth)acryliques, telles que celles décrites dans le brevet US 5,015,523, les compositions à base de polyuréthanes thermodurcissables, telles que celles décrites dans le brevet EP 0404111 et les compositions à base de latex poly(méth)acryliques ou de latex de type polyuréthane, telles que celles décrites dans les brevets US 5,316,791 et EP 0680492.

Les compositions de primaire préférées sont les compositions à base de polyuréthanes et les compositions à base de latex, en particulier les latex de polyuréthane et poly(méth)acryliques, et leurs mélanges.

Les latex poly(méth)acryliques sont des latex de copolymères constitués principalement par un (méth)acrylate, tel que par exemple le (méth)acrylate d'éthyle, de butyle, de méthoxyéthyle ou d'éthoxyéthyle, avec une proportion généralement mineure d'au moins un autre co-monomère, tel que par exemple du styrène.

Parmi les compositions de primaire commerciales convenant pour l'invention, on peut citer les compositions Witcobond® 232, Witcobond® 234, Witcobond® 240, Witcobond® 242 (commercialisées par BAXENDEN CHEMICALS), Neorez® R-962, Neorez® R-972, Neorez® R-986 et Neorez® R-9603 (commercialisées par ZENECA RESINS).

Ces compositions de primaire peuvent être déposées sur les faces de l'article par trempage ou centrifugation puis séchées à une température d'au moins 70 °C et pouvant aller jusqu'à 100 °C, de préférence de l'ordre de 90 °C, pendant une durée de 2 minutes à 2 heures, généralement de l'ordre de 15 minutes, pour former des couches de primaire ayant des épaisseurs, après cuisson, de 0,2 à 2,5 $\mu$m, de préférence de 0,5 à 1,5 $\mu$m.

L'article d'optique selon l'invention peut également comporter des revêtements formés sur le revêtement antireflet et capables de modifier ses propriétés de surface, tels que des revêtements hydrophobes et/ou oléophobes (top coat anti-salissures). Ces revêtements sont de préférence déposés sur la couche externe du revêtement antireflet. Leur épaisseur est en général inférieure ou égale à 10 nm, de préférence de 1 à 10 nm, mieux de 1 à 5 nm.

Il s'agit généralement de revêtements de type fluorosilane ou fluorosilazane. Ils peuvent être obtenus par dépôt d'un fluorosilane ou fluorosilazane précurseur, comprenant de préférence au moins deux groupes hydrolysables par molécule. Les fluorosilanes précurseurs contiennent préférentiellement des groupements fluoropolyéthers et mieux des groupements perfluoropolyéthers. Ces fluorosilanes sont bien connus et sont décrits, entre autres, dans les brevets US 5,081,192, US 5,763,061, US 6,183, 872, US 5,739, 639, US 5,922,787, US 6,337,235, US 6,277,485 et EP 0933377.

Une composition de revêtement hydrophobe et/ou oléophobe préférée est commercialisée par Shin-Etsu Chemical sous la dénomination KP 801M®. Une autre composition de revêtement hydrophobe et/ou oléophobe préférée est commercialisée par Daikin Industries sous la dénomination OPTOOL DSX®. Il s'agit d'une résine fluorée comprenant des groupes perfluoropropylène.

Typiquement, un article d'optique selon l'invention comprend un substrat successivement revêtu d'une couche de primaire antichoc, d'un revêtement anti-abrasion et/ou anti-rayure, d'un revêtement antireflet (ou réfléchissant) et antistatique selon l'invention et d'un revêtement hydrophobe et/ou oléophobe.

L'utilisation d'une couche à base d'oxyde d'étain dans un revêtement antireflet présente plusieurs avantages par rapport à des articles d'optiques à propriétés antireflet comprenant une couche antistatique à base de matériaux tels que l'ITO, l'oxyde d'indium ou l'oxyde de zinc. Effectivement, les couches d'ITO, d'oxyde d'indium ($In_2O_3$), d'oxyde

de zinc ou d'oxyde de zinc dopé conduisent toutes à l'apparition de défauts cosmétiques lorsqu'elles sont comprises dans un revêtement antireflet déposé sur un substrat conforme à l'invention, c'est-à-dire possédant un taux de reprise en eau supérieur ou égal à 0,6 % en masse, ce qui n'est pas le cas d'une couche à base de SnO$_2$ selon l'invention.

De plus, une couche antistatique à base d'ITO présente l'inconvénient d'absorber dans le domaine visible de façon plus importante qu'une couche de SnO$_2$ de même épaisseur, son niveau de jaune étant plus élevé. Ce défaut est nettement visible pour des épaisseurs de couches relativement peu élevées, une couche d'ITO apparaissant généralement jaune à des épaisseurs de l'ordre de 13 nm, malgré un dépôt sous assistance ionique, le substrat étant regardé visuellement sur sa tranche, alors qu'une couche de SnO$_2$ de 50 nm d'épaisseur est encore transparente.

Le remplacement d'une couche d'ITO classique, typiquement renfermant de l'ordre de 5% de SnO$_2$ par une couche de SnO$_2$, matériau électriquement conducteur hautement transparent, conduit à des propriétés antistatiques équivalentes et à la préservation des propriétés optiques, en particulier la transparence des articles d'optiques.

Par ailleurs, le procédé selon l'invention mettant en jeu l'oxyde d'étain est plus facile à maîtriser que le procédé correspondant mettant en jeu l'ITO, améliorant de ce fait la productivité.

Les différentes couches du revêtement antireflet de l'invention présentent de bonnes propriétés d'adhésion, en particulier à l'interface avec le substrat. Les propriétés d'adhésion de l'ensemble du revêtement antireflet au substrat ont été vérifiées au moyen du test communément appelé "n×10 coups", en suivant la procédure décrite dans la demande internationale WO 99/49097.

De préférence, l'article d'optique selon l'invention n'absorbe pas dans le visible ou absorbe peu dans le visible, ce qui signifie, au sens de la présente demande, que son facteur de transmission dans le visible $\tau_V$, encore nommé facteur relatif de transmission dans le visible, est supérieur à 90 %, mieux supérieur à 95 %, mieux encore supérieur à 96 % et de façon optimale supérieur à 97 %.

Le facteur $\tau_v$ répond à une définition internationale normalisée (norme ISO 13666:1998) et est mesuré conformément à la norme ISO 8980-3. Il est défini dans la gamme de longueur d'onde allant de 380 à 780 nm.

De préférence, l'absorption lumineuse de l'article revêtu selon l'invention est inférieure ou égale à 1 %.

De préférence encore, le facteur moyen de réflexion dans le domaine visible (400-700 nm) d'un article revêtu d'un revêtement antireflet selon l'invention, noté R$_m$, est inférieur à 2,5 % par face, mieux inférieur à 2 % par face et encore mieux inférieur à 1 % par face de l'article. Dans un mode de réalisation optimal, l'article comprend un substrat dont les deux surfaces principales sont revêtues d'un revêtement antireflet selon l'invention et présente une valeur de R$_m$ totale (cumul de réflexion due aux deux faces) inférieure à 1%, de préférence comprise entre 0,7 et 0,8 %. Les moyens pour parvenir à de telles valeurs de R$_m$ sont bien connus de l'homme du métier.

Le facteur de réflexion lumineux Rv d'un revêtement anti-reflets selon l'invention, est inférieur à 2,5 % par face, de préférence inférieur à 2 % par face, mieux inférieur à 1 % par face de l'article, mieux ≤ 0,75 %, mieux encore ≤ 0,5 % et de façon optimale ≤ 0,4 %.

Dans la présente demande, le "facteur moyen de réflexion" R$_m$ (moyenne de la réflexion spectrale sur l'ensemble du spectre visible entre 400 et 700 nm) et le facteur de réflexion lumineux R$_v$ sont tels que définis dans la norme ISO 13666:1998, et mesurés conformément à la norme ISO 8980-4.

Les articles d'optique selon l'invention possèdent un temps de décharge (ou temps de dissipation d'une charge statique) ≤ 500 millisecondes. Les articles d'optique selon l'invention permettent même d'atteindre des temps de décharge ≤ 200 millisecondes et mieux ≤ 100 et mieux encore ≤ 75 millisecondes. Avantageusement, leurs propriétés antistatiques sont stables dans le temps, ce qui signifie que les caractéristiques relatives au temps de décharge énoncées ci-dessus sont encore vérifiées au moins 6 mois après la fabrication des articles d'optique.

Les exemples suivants illustrent l'invention de façon plus détaillée mais non limitative.

EXEMPLES

1. Procédures générales

Les articles d'optique employés dans les exemples comprennent un substrat de lentille ORMA® ESSILOR de 65 mm de diamètre, de puissance -2,00 dioptries et d'épaisseur 1,2 mm, revêtu : i) d'un revêtement de primaire antichoc à base d'un latex polyuréthane contenant des motifs polyester, durci à 90 °C pendant 1 heure (Witcobond® 234 de BAXENDEN CHEMICALS, dépôt centrifuge à 1500 tours/minute pendant 10 à 15 secondes); ii) du revêtement anti-abrasion et anti-rayures (hard coat) divulgué dans l'exemple 3 du brevet EP 0614957 (d'indice de réfraction égal à 1,50), à base d'un hydrolysat d'époxy trialcoxysilane (γ-glycidoxypropyltriméthoxysilane, GLYMO) et de dialkyl dialcoxysilane (diméthyldiéthoxysilane, DMDES), de silice colloïdale et d'acétylacétonate d'aluminium; iii) d'un revêtement antireflet; et i) d'un revêtement anti-salissures.

Ledit revêtement anti-abrasion et anti-rayures a été obtenu par dépôt et durcissement d'une composition comprenant en masse, 224 parties de GLYMO, 80,5 parties de HCl 0,1 N, 120 parties de DMDES, 718 parties de silice colloïdale à 30 % massique dans le méthanol, 15 parties d'acétylacétonate d'aluminium (catalyseur de durcissement) et 44 parties d'éthylcellosolve. La composition comporte également 0,1 % de tensioactif FLUORAD™ FC-430® de 3M en masse par rapport à la masse totale de la composition.

Les couches du revêtement antireflet ont été déposées sans chauffage des substrats par évaporation sous vide, éventuellement, lorsque précisé, assistée par faisceau d'ions oxygène pendant le dépôt (source d'évaporation : canon à électrons).

Le revêtement anti-salissures a été obtenu par évaporation sous vide du composé Optool DSX® de la société Daikin Industries (épaisseur : 1-5 nm).

Le bâti de dépôt est une machine BAK 760 Physimeca équipée d'un canon à électrons (8kV) pour l'évaporation des oxydes, d'un creuset à effet Joule pour le dépôt du top coat et d'un canon à ions Commonwealth Mark II alimenté par une alimentation de puissance Veeco pour la phase préliminaire de préparation de la surface du substrat par des ions argon (IPC), ainsi que pour les dépôts de couches sous assistance ionique (IAD).

Les couches antistatiques sont formées selon l'invention à partir de granulés de $SnO_2$ fournis par Cerac (Référence :T-1218, diamètre : 3-12mm, item n° : H618828 pureté : 99,9%), et dans les exemples comparatifs à partir de granulés d'ITO (pourcentage massique oxyde d'étain (5) -oxyde d'indium (95)) fournis par Optron Inc. Les autres couches du revêtement antireflet sont formées à partir de granulés de $ZrO_2$ (Umicore) ou $SiO_2$ (Optron Inc.).

En comparatifs, sont également fournis des essais sur des monocouches d'$In_2O_3$ Cerac 3-12 mm I-1071 item n° : H608830, de ZnO dopé au $B_2O_3$ Cerac 3-12 mm Z-2070 item n°H614757-1, de ZnO dopé à l'Al.

L'épaisseur des couches a été contrôlée au moyen d'une microbalance à quartz.

Les mesures de transmission de la lumière à travers les verres ont été effectuées en utilisant un spectrophotomètre de la société Zeiss une heure après la préparation des verres. Il a été vérifié que les valeurs de τv obtenues étaient stables en effectuant une deuxième mesure au bout d'une semaine.

## 2. Modes opératoires

Le procédé de préparation des articles d'optique comprend l'introduction du substrat revêtu du revêtement de primaire et du revêtement anti-abrasion décrits ci-dessus dans une enceinte de dépôt sous vide, une étape de pompage jusqu'à l'obtention d'un vide secondaire, une étape d'activation de la surface du substrat par un faisceau d'ions argon (IPC : 1 minute, 100 V, 1 A), l'arrêt de l'irradiation ionique, et le dépôt par évaporation :

- d'une couche de $ZrO_2$ avec une vitesse de dépôt de 0,3 nm/s,
- d'une couche de $SiO_2$ avec une vitesse de 0,7 nm/s,
- d'une couche de $ZrO_2$ avec une vitesse de 0,3 nm/s,
- d'une couche électriquement conductrice sous assistance d'ions oxygène (1,2A / 100V) avec une vitesse de 0,15 nm/s ($SnO_2$, ou ITO pour les exemples comparatifs),
- d'une couche de $SiO_2$ avec une vitesse de 1 nm/s,
- d'une couche de revêtement anti-salissures (top coat) (Optool DSX ™ de la société Daikin),

et enfin une étape de ventilation.

Les épaisseurs mentionnées ci-dessus dans les vitesses de dépôt sont des épaisseurs physiques

## 3. Caractérisations

### a. Caractérisation de la résistance à l'abrasion

La résistance à l'abrasion a été évaluée par détermination des valeurs BAYER ASTM (Bayer sable) et Bayer ISTM (Bayer alumine) sur les substrats revêtus du revêtement antireflet selon les méthodes décrites dans la demande WO 2008/001011 (norme ASTM F 735.81). Plus la valeur obtenue au test BAYER est élevée, plus la résistance à l'abrasion est élevée.

Ainsi, la valeur de Bayer ASTM (Bayer sable) est qualifiée de bonne lorsque R est supérieur ou égal à 3,4 et inférieur à 4,5. La valeur de Bayer ISTM est qualifiée de bonne lorsque R est supérieur ou égal à 3 et inférieur à 4,5. La valeur de Bayer Sable ou ISTM est qualifiée d'excellente pour des valeurs de 4,5 et plus.

### b. Caractérisation de l'adhésion du revêtement antireflet sur le substrat (test nx10 coups)

Le test qualitatif connu sous le nom de test "n×10 coups" permet d'évaluer les propriétés d'adhésion d'un film déposé sur un substrat, notamment l'adhésion d'un revêtement antireflet à un substrat de lentille ophtalmique. Il a été réalisé sur la face convexe des lentilles en suivant la procédure décrite dans la demande internationale WO 99/49097.

Une sollicitation (ou cycle) consiste en 10 fois un aller-retour de la gomme (eraser). L'opérateur a vérifié visuellement l'état de la lentille testée toutes les 3 sollicitations jusqu'à 9 sollicitations. L'appréciation consiste à relever le nombre de sollicitations que peut supporter une lentille avant l'apparition d'un défaut. Dans le cadre de la présente demande de brevet, on considère que la lentille a passé avec succès le test si la lentille est intacte après 9 sollicitations.

c) Evaluation du temps de décharge

Les temps de décharge des articles d'optique ont été mesurés à température ambiante (25 °C) au moyen d'un appareil de mesure de temps de décharge JCI 155 (John Chubb Instrumentation) en suivant les spécifications du constructeur, après avoir soumis lesdits articles d'optique à une décharge corona de -9000 volts pendant 30 ms.

Au cours de ces expériences de mesure de la charge et de la décharge de la surface d'un verre soumis à une décharge corona, les deux paramètres suivants ont été déterminés : la tension maximale mesurée à la surface du verre, notée $U_{max}$, et le temps pour atteindre $1/e = 36,7\%$ de la tension maximale, qui correspond au temps de décharge.

La puissance des verres utilisés doit être rigoureusement la même afin de pouvoir comparer la performance des différents verres, car les valeurs mesurées par l'appareil dépendent de la géométrie des verres.

d) Evaluation de la présence éventuelle de défauts cosmétiques

Il s'agit de défauts optiques localisés.

Bien que ces défauts soient visibles à l'œil nu, pour les défauts les plus prononcés, par réflexion en angle rasant, leur observation est facilitée par l'utilisation d'une lampe à arc.

La présence éventuelle de défauts cosmétiques des articles d'optiques (articles selon l'invention ou comparatifs) est évaluée visuellement sous lampe à arc (lampe haute intensité), après stockage des articles, immédiatement après leur préparation (temps de référence t), dans une enceinte "climatique" régulée à 40°C avec 80 % d'humidité relative à pression atmosphérique, et pendant une durée déterminée.

Ces conditions de stockage permettent de faire vieillir prématurément les articles d'optique et d'accélérer l'apparition éventuelle de défauts cosmétiques. Les défauts visibles à la lampe à arc se présentent sous la forme de points ou de petits filaments.

Par pression atmosphérique, on entend une pression de 1,01325 Bar.

e) Caractérisation de la reprise en eau d'un substrat

Ce test est réalisé sur un substrat d'article d'optique nu et permet de déterminer quels substrats sont sujets à l'apparition de défauts cosmétiques au cours du temps, une fois revêtus d'un revêtement antireflet comprenant une couche antistatique classique, c'est-à-dire une couche qui ne comprend pas d'oxyde d'étain dans les proportions selon l'invention. Les inventeurs ont mis au point ce test qui donne une bonne corrélation entre le taux de reprise en eau d'un substrat nu et son aptitude à donner lieu à l'apparition de défauts cosmétiques une fois qu'il a subi un traitement antireflet et antistatique.

Avant d'être introduit dans l'enceinte de stockage en vue de la détermination de son taux de reprise en eau, le substrat nu est séché (déshydraté) dans une étuve ou enceinte à 45°C pendant 48h sous pression atmosphérique, sans utiliser de moyen de déshydratation additionnel. Lors de cette déshydratation, le taux d'humidité dans l'étuve est proche de 0 %.

Le substrat est ensuite stocké pendant 800 heures dans une enceinte à 50°C saturée en eau, c'est-à-dire sous une humidité relative (HR) de 100 %, et à pression atmosphérique. Le taux de reprise en eau du substrat nu est déterminé grâce à une balance AT261 (Mettler Toledo), en pesant le substrat déshydraté et le substrat approximativement 30 secondes après sa sortie de l'enceinte de stockage humide, selon l'équation :

$$\text{Taux de reprise en eau (\%)} = \frac{\text{Masse du substrat (t = 800 h) - Masse initiale du substrat déshydraté}}{\text{Masse initiale du substrat déshydraté}}$$

Différents substrats de géométrie identique ont été testés (biplans de diamètre 65 mm et d'épaisseur 2 mm). Ils sont décrits ci-dessous et les résultats des tests présentés dans le Tableau 1.

Les enceintes utilisées étaient toutes des enceintes HERAEUS Instruments D6450 HANAU Type UT 6060.

**Tableau 1**

| Substrat | Taux de reprise en eau (800 h, 50°C, Patm, 100 % HR) |
|---|---|
| MR6® | 1,7% |

(suite)

| Substrat | Taux de reprise en eau (800 h, 50°C, Patm, 100 % HR) |
|---|---|
| ORMA® | 1,5 % |
| MR8® | 1,9 % |
| MR7® | 0,89 % |
| Polycarbonate (PC) | 0,37 % |
| 1,74® | 0,12 % |
| Verre minéral | < 0,6 % |

Les substrats sont obtenus à partir des résines MR6®, MR7®, MR8® commercialisés par Mitsui Toatsu Chemicals Inc. MR6®, MR7® et MR8® sont des résines thio-uréthanes (conduisant à des polythiouréthanes thermodurcissables). Les substrats obtenus à partir de MR6® ont un indice de réfraction de 1,59 et un nombre d'Abbe de 36. Ceux obtenus à partir du MR7® ont un indice de réfraction de 1,66 et un nombre d'Abbe de 32. La résine 1,74® est une résine polyépisulfure ayant un indice de réfraction de 1,74. Le substrat polycarbonate utilisé est une résine homopolycarbonate de bisphénol-A d'indice de réfraction de 1,59 commercialisée par TEIJIN sous la marque PANLITE®.

Le substrat en verre minéral (à base de silice) utilisé est un verre Essilor d'indice de réfraction égal à 1,523.

Les substrats ORMA® et ceux obtenus à partir des résines MR6®, MR7®, MR8® sont des substrats conformes à l'invention car ils possèdent un taux de reprise en eau supérieur ou égal à 0,6 % en masse par rapport à la masse totale du substrat dans les conditions de test présentées ci-dessus.

Les substrats 1,74®, polycarbonate (PC) et en verre minéral ne sont pas des substrats conformes à l'invention car ils présentent un taux de reprise en eau inférieur à 0,6 % en masse par rapport à la masse totale du substrat dans les conditions de test présentées ci-dessus. Le problème de l'apparition de défauts cosmétiques ne se pose pas pour ces substrats. Ils ne présentent aucun défaut cosmétique, que la couche antistatique soit à base de $SnO_2$ ou d'ITO (cf. Tableau 3).

4. Résultats

a) Substrat ORMA®

La constitution des articles d'optique obtenus selon les exemples 1, 2 et les exemples comparatifs C1 et C2 est détaillée ci-dessous (Tableau 2). Sont également indiqué(e)s leurs performances en termes d'adhésion, de résistance à l'abrasion, de propriétés antistatiques, la présence éventuelle de défauts cosmétiques ainsi que les paramètres optiques suivants de ces articles d'optique : le facteur moyen de réflexion dans le domaine visible $R_m$, le facteur moyen de réflexion pondéré par la sensibilité oculaire (facteur de réflexion lumineux) $R_v$, le facteur de transmission dans le visible $\tau_V$, l'angle de teinte h et le chroma C* dans le système colorimétrique CIE L*a*b*. Les résultats présentés sont une moyenne réalisée sur un ensemble de plusieurs articles identiques préparés dans les mêmes conditions.

**Tableau 2**

| Exemple 1 | |
|---|---|
| | |
| Substrat + primaire + hard coat | |
| $ZrO_2$ | 30 nm |
| $SiO_2$ | 20 nm |
| $ZrO_2$ | 80 nm |
| **$SnO_2$** | **6,5 nm** |
| $SiO_2$ | 80 nm |
| Top coat | |
| | |
| Bayer sable | 4,3 |

(suite)

| Top coat | |
|---|---|
| Bayer ISTM | 8,7 |
| n×10 coups | ≥9 |
| $\tau_v$ (%) | 98,4 |
| $R_v$ (%) | 0,67 |
| Rm (%) | 0,73 |
| C* | 7,3 |
| h (°) | 144 |
| Temps de décharge (ms) | 30 |
| Défaut cosmétique à t+24h | Non |
| Défaut cosmétique à t+ 2 mois | Non |
| | |
| Exemple comparatif C1 | |
| | |
| Substrat + primaire + hard coat | |
| $ZrO_2$ | 30 nm |
| $SiO_2$ | 20 nm |
| $ZrO_2$ | 80 nm |
| **ITO** | **6,5 nm** |
| $SiO_2$ | 80 nm |
| Top coat | |
| | |
| Bayer sable | 4,5 |
| Bayer ISTM | 8,5 |
| n×10 coups | ≥9 |
| $\tau_v$ (%) | 98,1 |
| $R_v$ (%) | 0,75 |
| $R_m$ (%) | 0,70 |
| C* | 7 |
| h (°) | 135 |
| Temps de décharge (ms) | 50 |
| Défaut cosmétique à t+24h | Non |
| Défaut cosmétique à t+ 2 mois | Parfois |
| Exemple 2 | |
| | |
| Substrat + primaire + hard coat | |
| $ZrO_2$ | 30 nm |
| $SiO_2$ | 20 nm |
| $ZrO_2$ | 80 nm |

(suite)

| Substrat + primaire + hard coat | |
|---|---|
| **SnO$_2$** | **13 nm** |
| SiO$_2$ | 80 nm |
| Top coat | |
| | |
| Bayer sable | 4,1 |
| Bayer ISTM | 8,3 |
| n$\times$10 coups | $\geq$9 |
| $\tau_v$ (%) | 98,6 |
| R$_v$ (%) | 0,64 |
| R$_m$ (%) | 0,72 |
| C* | 6.8 |
| h (°) | 136 |
| Temps de décharge (ms) | 57 |
| Défaut cosmétique à t+24h | Non |
| Défaut cosmétique à t+ 2 mois | Non |
| | |
| Exemple comparatif C2 | |
| | |
| Substrat + primaire + hard coat | |
| ZrO$_2$ | 30 nm |
| SiO$_2$ | 20 nm |
| ZrO$_2$ | 80 nm |
| **ITO** | **13 nm** |
| SiO$_2$ | 80 nm |
| Top coat | |
| | |
| Bayer sable | 4,5 |
| Bayer ISTM | 8,5 |
| n$\times$10 coups | $\geq$9 |
| $\tau_v$ (%) | 98,1 |
| R$_v$ (%) | 0,75 |
| R$_m$ (%) | 0,70 |
| C* | 7 |
| h (°) | 135 |
| Temps de décharge (ms) | 50 |
| Défaut cosmétique à t+24h | Oui |
| Défaut cosmétique à t+ 2 mois | Oui |

Les tests de durabilité physico-chimiques des articles selon l'invention donnent des résultats équivalents à ceux obtenus sur des empilements à base d'ITO (n×10 coups, Bayer). Les paramètres suivants sont également comparables : $R_m$, $R_v$, C*, h, $\tau_v$, temps de décharge.

Tous les articles d'optique obtenus sont hautement transparents et présentent en même temps des propriétés antistatiques (temps de décharge inférieur à 500 ms), des propriétés antireflet, une bonne résistance à l'abrasion, une bonne résistance thermique et de bonnes propriétés d'adhérence. Il a été constaté que le temps de décharge des articles d'optique préparés était stable dans le temps (aucune variation après un contrôle effectué 6 mois après leur préparation).

Les lentilles selon l'invention donnent entièrement satisfaction du point vue cosmétique puisqu'elles ne présentent pas de défauts de surface visibles, notamment à la lampe à arc.

Ce n'est pas le cas des lentilles comparatives, incorporant une couche d'ITO.

Les exemples comparatifs C1 et C2 sont obtenus, en reproduisant les exemples 1 et 2, mais en remplaçant le matériau conducteur $SnO_2$ par de l'ITO (Matériau tel que décrit dans la procédure générale en 1 ci-dessus). Les lentilles de l'exemple comparatif C2 présentent toutes des défauts cosmétiques, aussi bien initialement (t + 24h) qu'au bout de 2 mois (t + 2 mois), alors que des défauts cosmétiques sont observables au bout de 2 mois sur certaines lentilles de l'exemple comparatif C1.

Ce n'est pas le cas de substrats comportant une monocouche d'ITO déposée dans les mêmes conditions de dépôt indiquées au point 2 ci-dessus (sous assistance d'ions oxygène (1,2A / 100V) avec une vitesse de 0,15 nm/s, d'$In_2O_3$, de ZnO dopé au $B_2O_3$, de ZnO dopé à l'Al plutôt que de $SnO_2$ (Matériaux détaillés dans « procédure générale » en 1. ci-dessus).

b) Evaluation d'autres substrats

L'exemple 2 et l'exemple comparatif C2 ont été reproduits en utilisant d'autres substrats que le substrat ORMA® (exemples 3 et 4 et exemples comparatifs C3 à C10). Les résultats sont présentés dans le Tableau 3, qui mentionne en rappel les résultats de l'exemple 2 et de l'exemple comparatif C2.

**Tableau 3**

| Substrat | Exemple | Couche antistatique | Défaut cosmétique à t + 2 mois |
|---|---|---|---|
| ORMA® | 2 | $SnO_2$ | Non |
| | C2 | ITO | Oui |
| MR7® | 3 | $SnO_2$ | Non |
| | C3 | ITO | Oui |
| MR8® | 4 | $SnO_2$ | Non |
| | C4 | ITO | Oui |
| 1,74® | C5 | $SnO_2$ | Non |
| | C6 | ITO | Non |
| Polycarbonate (PC) | C7 | $SnO_2$ | Non |
| | C8 | ITO | Non |
| Verre minéral | C9 | $SnO_2$ | Non |
| | C10 | ITO | Non |

On constate que les lentilles conformes à l'invention, comprenant une couche de $SnO_2$ dans le revêtement antireflet et un substrat ayant un taux de reprise en eau supérieur ou égal à 0,6 % en masse par rapport à la masse totale du substrat dans les conditions de test présentées ci-dessus ne présentent pas de défaut cosmétique (exemple 2-4). Dans les mêmes conditions, les lentilles comparatives comprenant une couche d'ITO dans le revêtement antireflet et un substrat ayant un taux de reprise en eau supérieur ou égal à 0,6 % en masse par rapport à la masse totale du substrat dans les conditions de test présentées ci-dessus présentent des défauts cosmétiques (exemples comparatifs C2 à C5).

Enfin, comme annoncé précédemment, les substrats à base de 1,74®, polycarbonate (PC) et verre minéral ne présentent aucun défaut cosmétique au bout de deux mois, que la couche antistatique soit à base de $SnO_2$ ou d'ITO.

c) Influence de l'épaisseur de la couche de $SnO_2$

L'exemple 2 a été reproduit en modifiant la nature du substrat (MR8® au lieu d'ORMA®) et en faisant varier l'épaisseur de la couche antistatique de $SnO_2$ de 3 à 75 nm. La présence éventuelle de défauts cosmétiques a été observée et les résultats sont consignés dans le Tableau 4.

**Tableau 4**

| Exemple | Epaisseur de la couche de $SnO_2$ (nm) | Date de l'observation | Défaut cosmétique |
|---------|------------------|----------------|-------------------|
| 5 | 3 | t + 5 semaines | |
| 6 | 6,5 | t + 5 semaines | |
| 7 | 13 | t + 6 mois | |
| 8 | 20 | t + 5 semaines | |
| 9 | 26 | t + 4 semaines | Non |
| 10 | 32 | t + 4 semaines | |
| 11 | 50 | t + 4 semaines | |
| 12 | 75 | t + 2 semaines | |

On constate que même pour des épaisseurs élevées de couche électriquement conductrice de $SnO_2$, aucun défaut cosmétique n'est observé.

d) L'exemple 4 a été reproduit en remplaçant la couche de $SnO_2$ à une pureté de 99,9% par les mélanges suivants :

$SnO_2$ 25% $In_2O_3$ 75%

$SnO_2$ 50% $In_2O_3$ 50%

$SnO_2$ 75% $In_2O_3$ 25%

Les résultats figurent dans le tableau ci-après :

**Tableau 5**

| Exemple | Ratio $SnO_2$-$In_2O_3$ | Défaut cosmétique après une semaine |
|---------|------------------|-------------------------------------|
| C11 | 25-75 | Oui |
| 13 | 50-50 | Non |
| 14 | 75-25 | Non |

**Revendications**

1. Article d'optique à propriétés antistatiques et antireflet ou réfléchissantes, comprenant un substrat ayant au moins une surface principale revêtue d'un revêtement antireflet ou réfléchissant, ledit revêtement comprenant au moins une couche électriquement conductrice, où :

   - ladite couche électriquement conductrice comprend au moins 30 % en masse d'oxyde d'étain, $SnO_2$, par rapport à la masse totale de la couche électriquement conductrice,
   - le dépôt de ladite couche électriquement conductrice a été réalisé sous assistance ionique :

      o soit dans une enceinte à vide sous une pression résiduelle variant de $6.10^{-5}$ mbar à $2.10^{-4}$ mbar,
      o soit sous une tension d'accélération allant de 50 à 200 V, et

   - ledit substrat a un taux de reprise en eau supérieur ou égal à 0,6 % en masse par rapport à la masse totale dudit substrat, le taux de reprise en eau étant mesuré après séchage préalable dudit substrat puis stockage de ce substrat pendant 800 heures dans une enceinte à 50°C sous une humidité relative de 100 % et à pression atmosphérique.

2. Article d'optique selon l'une quelconque des revendications précédentes, **caractérisé en ce que** le dépôt de ladite couche électriquement conductrice a été réalisé sous assistance ionique en bombardant la surface du substrat avec un faisceau d'ions émis par un canon à ions, avec des ions d'une densité de courant comprise entre 10 et 200 $\mu$A/cm$^2$.

3. Article d'optique selon l'une quelconque des revendications précédentes, **caractérisé en ce que** la couche électriquement conductrice ne contient pas d'indium.

4. Article d'optique selon l'une quelconque des revendications précédentes, **caractérisé en ce que** la couche électriquement conductrice comprend au moins 50 % en masse d'oxyde d'étain, $SnO_2$, par rapport à la masse totale de la couche électriquement conductrice.

5. Article d'optique selon l'une quelconque des revendications précédentes, **caractérisé en ce que** la couche électriquement conductrice comprend au moins 90 % en masse d'oxyde d'étain, $SnO_2$, par rapport à la masse totale de la couche électriquement conductrice.

6. Article d'optique selon l'une quelconque des revendications précédentes, **caractérisé en ce que** la couche électriquement conductrice consiste en une couche de $SnO_2$.

7. Article d'optique selon l'une quelconque des revendications précédentes, **caractérisé en ce que** son facteur de transmission dans le visible $\tau_v$ est supérieur à 97 %.

8. Article d'optique selon l'une quelconque des revendications précédentes, **caractérisé en ce que** le substrat est de nature poly(thiouréthane).

9. Article d'optique selon l'une quelconque des revendications précédentes, **caractérisé en ce que** l'épaisseur de la couche électriquement conductrice varie de 1 à 20 nm.

10. Article d'optique selon l'une quelconque des revendications 2 à 9, **caractérisé en ce que** le faisceau d'ions est un faisceau d'ions oxygène.

11. Article d'optique selon l'une quelconque des revendications précédentes, **caractérisé en ce que** le revêtement antireflet ou réfléchissant comprend au moins une couche comprenant un mélange de $SiO_2$ et d'$Al_2O_3$, et **en ce que** le dépôt de cette couche a été réalisé dans une enceinte à vide avec introduction de gaz dans ladite enceinte pendant ledit dépôt, et **en ce que** la pression dans l'enceinte à vide pendant l'introduction de gaz varie de $5.10^{-5}$ à $3.10^{-4}$ mbar.

12. Article d'optique selon l'une quelconque des revendications précédentes, **caractérisé en ce que** l'adhésion du revêtement antireflet ou réfléchissant au substrat est telle qu'il présente un résultat au test "n$\times$10 coups" supérieur ou égal à 9.

13. Procédé de fabrication d'un article d'optique selon l'une quelconque des revendications précédentes, comprenant les étapes suivantes :

> - fournir un article d'optique comprenant un substrat ayant au moins une surface principale, ledit substrat ayant un taux de reprise en eau supérieur ou égal à 0,6 % en masse par rapport à la masse totale dudit substrat, le taux de reprise en eau étant mesuré comme décrit dans la revendication 1 ;
> - déposer sur ladite surface principale du substrat un revêtement antireflet ou réfléchissant, ledit revêtement comprenant au moins une couche électriquement conductrice, comprenant au moins 30 % en masse d'oxyde d'étain, $SnO_2$, par rapport à la masse totale de la couche électriquement conductrice, le dépôt de ladite couche électriquement conductrice étant réalisé sous assistance ionique :
>
> > soit dans une enceinte à vide sous une pression résiduelle variant de $6.10^{-5}$ mbar à $2.10^{-4}$ mbar,
> > soit sous une tension d'accélération allant de 50 à 200 V,

- récupérer un article d'optique comprenant un substrat ayant une surface principale revêtue dudit revêtement antireflet ou réfléchissant qui comporte ladite couche électriquement conductrice.

**14.** Procédé selon la revendication 13, **caractérisé en ce que** le dépôt de ladite couche électriquement conductrice a été réalisé sous assistance ionique en bombardant la surface du substrat avec un faisceau d'ions émis par un canon à ions, avec des ions d'une densité de courant comprise entre 10 et 200 $\mu$A/cm$^2$.

**15.** Procédé selon la revendication 13 ou 14, **caractérisé en ce que** le dépôt de ladite couche électriquement conductrice est réalisé par évaporation sous assistance ionique.


**Patentansprüche**

**1.** Optischer Gegenstand mit antistatischen und antireflektierenden oder reflektierenden Eigenschaften, umfassend ein Substrat mit mindestens einer Hauptfläche, die mit einer antireflektierenden oder reflektierenden Beschichtung beschichtet ist, wobei die Beschichtung mindestens eine elektrisch leitende Schicht aufweist, wobei:

- die elektrisch leitende Schicht mindestens 30 Gew. -% Zinnoxid, $SnO_2$ , bezogen auf das Gesamtgewicht der elektrisch leitenden Schicht umfasst,
- das Abscheiden der elektrisch leitenden Schicht unter Ionenunterstützung durchgeführt worden ist:

  ○ entweder in einem Vakuumbehälter bei einem Restdruck, der von $6.10^{-5}$ mbar bis $2.10^{-4}$ mbar variiert,
  ○ oder bei einer Beschleunigungsspannung von 50 bis 200 V , und

- das Substrat einen Wasseraufnahmegrad von mehr als oder gleich 0,6 Gew.-% bezogen auf das Gesamtgewicht des Substrats aufweist, wobei der Wasseraufnahmegrad nach vorhergehender Trocknung des Substrats und dann nach Lagerung des Substrats für 800 Stunden in einem Behälter bei 50 °C bei einer relativen Feuchtigkeit von 100 % und unter atmosphärischem Druck gemessen wird.

**2.** Optischer Gegenstand nach einem der vorhergehenden Ansprüche, **dadurch gekennzeichnet, dass** das Abscheiden der elektrisch leitenden Schicht unter Ionenunterstützung durch Beschießen der Oberfläche des Substrats mit einem von einer Ionenkanone emittierten Ionenstrahl mit Ionen mit einer Stromdichte zwischen 10 und 200 $\mu$A/cm$^2$ durchgeführt worden ist.

**3.** Optischer Gegenstand nach einem der vorhergehenden Ansprüche, **dadurch gekennzeichnet, dass** die elektrisch leitende Schicht kein Indium enthält.

**4.** Optischer Gegenstand nach einem der vorhergehenden Ansprüche, **dadurch gekennzeichnet, dass** die elektrisch leitende Schicht mindestens 50 Gew.-% Zinnoxid, $SnO_2$, bezogen auf das Gesamtgewicht der elektrisch leitenden Schicht umfasst.

**5.** Optischer Gegenstand nach einem der vorhergehenden Ansprüche, **dadurch gekennzeichnet, dass** die elektrisch leitende Schicht mindestens 90 Gew.-% Zinnoxid, $SnO_2$, bezogen auf das Gesamtgewicht der elektrisch leitenden Schicht umfasst.

**6.** Optischer Gegenstand nach einem der vorhergehenden Ansprüche, **dadurch gekennzeichnet, dass** die elektrisch leitende Schicht aus einer Schicht von $SnO_2$ besteht.

**7.** Optischer Gegenstand nach einem der vorhergehenden Ansprüche, **dadurch gekennzeichnet, dass** sein Transmissionsfaktor im Sichtbaren $\tau$V größer als 97 % ist.

**8.** Optischer Gegenstand nach einem der vorhergehenden Ansprüche, **dadurch gekennzeichnet, dass** das Substrat aus Poly(thiourethan) ist.

**9.** Optischer Gegenstand nach einem der vorhergehenden Ansprüche, **dadurch gekennzeichnet, dass** die Dicke der elektrisch leitenden Schicht von 1 bis 20 nm variiert.

**10.** Optischer Gegenstand nach einem der Ansprüche 2 bis 9, **dadurch gekennzeichnet, dass** es sich bei dem Ionenstrahl um einen Sauerstoffionenstrahl handelt.

11. Optischer Gegenstand nach einem der vorhergehenden Ansprüche, **dadurch gekennzeichnet, dass** die antireflektierende oder reflektierende Beschichtung mindestens eine Schicht aufweist, die eine Mischung aus $SiO_2$ und $Al_2O_3$ umfasst, und dass das Abscheiden dieser Schicht in einem Vakuumbehälter mit Einleiten von Gas in den Behälter während des Abscheidens durchgeführt worden ist, und dass der Druck in dem Vakuumbehälter während des Einleitens von Gas von $5.10^{-5}$ bis $3.10^{-4}$ mbar variiert.

12. Optischer Gegenstand nach einem der vorhergehenden Ansprüche, **dadurch gekennzeichnet, dass** die Haftung der antireflektierenden oder reflektierenden Beschichtung auf dem Substrat so beschaffen ist, dass sie beim "n×10 - Hübe"-Test ein Ergebnis größer oder gleich 9 aufweist.

13. Verfahren zum Herstellen eines optischen Gegenstandes nach einem der vorhergehenden Ansprüche, das die folgenden Schritte aufweist:

- Bereitstellen eines optischen Gegenstandes, umfassend ein Substrat mit mindestens einer Hauptfläche, wobei das Substrat einen Wasseraufnahmegrad von mehr als oder gleich 0,6 Gew.-% bezogen auf das Gesamtgewicht des Substrats aufweist, wobei der Wasseraufnahmegrad wie in Anspruch 1 beschrieben gemessen wird;
- Abscheiden einer antireflektierenden oder reflektierenden Beschichtung auf die Hauptfläche des Substrats, wobei die Beschichtung mindestens eine elektrisch leitende Schicht aufweist, die mindestens 30 Gew.-% Zinn-oxid, $SnO_2$, bezogen auf das Gesamtgewicht der elektrisch leitenden Schicht umfasst, wobei das Abscheiden der elektrisch leitenden Schicht unter Ionenunterstützung durchgeführt wird:

entweder in einem Vakuumbehälter bei einem Restdruck, der von $6.10^{-5}$ mbar bis $2.10^{-4}$ mbar variiert, oder bei einer Beschleunigungsspannung von 50 bis 200 V,

- Entnehmen eines optischen Gegenstands, umfassend ein Substrat mit einer Hauptfläche, die mit einer antireflektierenden oder reflektierenden Beschichtung beschichtet ist, die die elektrisch leitende Schicht aufweist.

14. Verfahren nach Anspruch 13, **dadurch gekennzeichnet, dass** das Abscheiden der elektrisch leitenden Schicht unter Ionenunterstützung durch Beschießen der Oberfläche des Substrats mit einem von einer Ionenkanone emittierten Ionenstrahl mit Ionen mit einer Stromdichte zwischen 10 und 200 $\mu A/cm^2$ durchgeführt worden ist.

15. Verfahren nach Anspruch 13 oder 14, **dadurch gekennzeichnet, dass** das Abscheiden der elektrisch leitenden Schicht durch Verdampfung unter Ionenunterstützung durchgeführt wird.

**Claims**

1. An optical article having antistatic and antireflection or reflective properties, comprising a substrate having at least one main surface coated with an antireflection or reflective coating, said coating comprising at least one electrically conductive layer, wherein:

- said electrically conductive layer comprises at least 30% by weight of tin oxide, $SnO_2$, relative to the total weight of the electrically conductive layer,
- the deposition of said electrically conductive layer has been performed under ionic assistance:

o either in a vacuum chamber under a residual pressure varying from $6.10^{-5}$ mbar to $2.10^{-4}$ mbar, o or under an acceleration voltage ranging from 50 to 200 V, and

- said substrate has a water uptake rate equal to or greater than 0.6% by weight relative to the total weight of said substrate, the water uptake rate being measured after predrying said substrate and then storing it for 800 hours in a chamber at 50°C under 100% relative humidity and at atmospheric pressure.

2. An optical article according to any one of the preceding claims, **characterized in that** the deposition of said electrically conductive layer has been performed under ionic assistance by bombarding the surface of the substrate with an ion beam emitted by an ion gun, with ions of a current density between 10 and 200 $A/cm^2$.

3. An optical article according to any one of the preceding claims, **characterized in that** the electrically conductive layer does not contain indium.

4. An optical article according to any one of the preceding claims, **characterized in that** the electrically conductive layer comprises at least 50% tin oxide, $SnO_2$ by weight relative to the total weight of the electrically conductive layer.

5. An optical article according to any one of the preceding claims, **characterized in that** the electrically conductive layer comprises at least 90% tin oxide, $SnO_2$ by weight relative to the total weight of the electrically conductive layer.

6. An optical article according to any one of the preceding claims, **characterized in that** the electrically conductive layer consists of a $SnO_2$ layer.

7. Optical article according to any one of the preceding claims, **characterized in that** its transmission factor in the visible range $\tau_v$ is greater than 97%.

8. An optical article according to any one of the preceding claims, **characterized in that** the substrate is of poly(thiourethane) nature.

9. An optical article according to any one of the preceding claims, **characterized in that** the thickness of the electrically conductive layer ranges from 1 to 20 nm.

10. An optical article according to any one of claims 2 to 9, **characterized in that** the ion beam is an oxygen ion beam.

11. An optical article according to any preceding claim, **characterized in that** the antireflection or reflective coating comprises at least one layer comprising a mixture of $SiO_2$ and $Al_2O_3$, and the deposition of this layer has been performed in a vacuum chamber while supplying gas into said chamber during said deposition, and the pressure in the vacuum chamber during gas supply varies from $5.10^{-5}$ to $3.10^{-4}$ mbar.

12. An optical article according to any one of the preceding claims, **characterized in that** the adhesion of the antireflective or reflective coating to the substrate is such that it exhibits an "n×10 blow" test result greater than or equal to 9.

13. A method for manufacturing an optical article according to any of the preceding claims, comprising:

- providing an optical article comprising a substrate having at least one main surface, said substrate having a water uptake rate equal to or greater than 0.6% by weight relative to the total weight of said substrate, the water uptake rate being measured such as described in claim 1;
- depositing onto said substrate's main surface an antireflection or reflective coating, said coating comprising at least one electrically conductive layer, comprising at least 30% of tin oxide, $SnO_2$, by weight, relative to the total weight of the electrically conductive layer, said electrically conductive layer being deposited by ion-assisted deposition:

  o either in a vacuum chamber under a residual pressure varying from $6.10^{-5}$ mbar to $2.10^{-4}$ mbar,
  o or under an acceleration voltage ranging from 50 to 200 V,

- recovering an optical article comprising a substrate, the main surface of which has been coated with said antireflection or reflective coating comprising said electrically conductive layer.

14. A method according to claim 13, **characterized in that** the deposition of said electrically conductive layer was performed under ionic assistance by bombarding the surface of the substrate with an ion beam emitted from an ion gun, with ions of a current density between 10 and 200 A/cm$^2$.

15. A method according to claim 13 or 14, wherein the deposition of said electrically conductive layer is performed by evaporation under ionic assistance.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0834092 A
- DE 3942990
- DE 4117257
- US 6852406 B
- US 2008028984 A
- US 2002018887 A
- WO 2009004222 A
- FR 2917510
- US 4689387 A
- US 4775733 A
- US 5059673 A
- US 5087758 A
- US 5191055 A
- WO 2008107325 A
- US 2006017011 A
- US 5268781 A
- EP 0614957 A
- US 4211823 A
- US 5015523 A
- JP 63141001 A
- JP 63087223 A
- EP 0404111 A
- US 5316791 A
- EP 0680492 A
- US 5081192 A
- US 5763061 A
- US 6183872 A
- US 5739639 A
- US 5922787 A
- US 6337235 B
- US 6277485 B
- EP 0933377 A
- WO 9949097 A
- WO 2008001011 A

**Littérature non-brevet citée dans la description**

- **Thin Film Processes II. Thin Film Processes.** Academic Press, 1978
- **Chemistry and Technology of the Epoxy Resins.** Chapman Hall, 1993
- **Epoxy Resins Chemistry and Technology.** Marcel Dekker, 1988